# EUROPEAN PATENT SPECIFICATION

(11) **EP 3 531 638 B1**
(45) Date of publication and mention of the grant of the patent: **28.09.2022**
(21) Application number: 18158945.8
(22) Date of filing: 27.02.2018
(51) Int. Cl.: H04L 47/12, H04W 28/12, H04L 5/00, H04W 28/02, H04L 47/11, H04L 47/24

(54) **HANDLING OF CONGESTION FOR FRONTHAUL TRAFFIC**
ABWICKLUNG VON STAUS IM FRONTHAUL-VERKEHR
GESTION DE LA CONGESTION POUR LE TRAFIC FRONTHAUL

(43) Date of publication of application: 28.08.2019
(73) Proprietor: Nokia Solutions and Networks GmbH & Co. KG, 81541 Munich (DE)
(72) Inventor: DEISS, Thomas, 44625 Herne (DE); DICKHAUS, Bertold, 57462 Olpe (DE); REINARTZ, Ole, 89075 Ulm (DE); KNUEPPEL, Dieter, 41068 Mönchengladbach (DE)

(56) References cited:
- US-A1- 2017 019 803
- EUGENE CHAI ET AL: "SPIRO: Turning elephants into mice with efficient RF transport", 2015 IEEE CONFERENCE ON COMPUTER COMMUNICATIONS (INFOCOM), 26 April 2015 (2015-04-26), pages 819-827, XP055297615, DOI: 10.1109/INFOCOM.2015.7218452 ISBN: 978-1-4799-8381-0
- CHANG CHIA-YU ET AL: "Impact of Packetization and Scheduling on C-RAN Fronthaul Performance", 2016 IEEE GLOBAL COMMUNICATIONS CONFERENCE (GLOBECOM), IEEE, 4 December 2016 (2016-12-04), pages 1-7, XP033058609, DOI: 10.1109/GLOCOM.2016.7841885 [retrieved on 2017-02-02]

## Description

### Field of the Invention

The present invention relates to an apparatus and a method by which handling of congestion for fronthaul traffic can be achieved.

### Related background Art

The project leading to this application has received funding from the European Union's Horizon 2020 research and innovation program under grant agreement No 671598.

The following meanings for the abbreviations used in this specification apply:
- AQM: Active Queue Management
- BBU: Baseband Unit
- CC: Congestion Control
- CPRI: Common Public Radio Interface
- DU: Distributed Unit
- FH: Fronthaul
- FPGA: Field Programmable Gate Array
- IP: Internet Protocol
- MAC: Media Access Control
- NGFI: Next Generation Radio Interface
- PDCP: Packet Data Convergence Protocol
- PDU: Protocol Data Unit
- QoS: Quality of Service
- RTT: Round Trip Time
- RU: Radio Unit
- TCP: Transmission Control Protocol
- TDM: Time Division Multiplex
- UE: User Equipment

Embodiments of the present invention, although not limited to this, relate control of fronthaul traffic between a network element such as a BBU and at least one RU.

Antenna data needs to be exchanged between a radio unit (RU) and a baseband processing unit (BBU), called as well e.g. "Distributed unit (DU)" or "System Module". Presently, CPRI is used for the exchange of the antenna data. CPRI is a TDM based scheme, where all sampled antenna data are send as a constant bit rate stream of data. IEEE (1914.3) and the CPRI consortium have specified schemes to carry the antenna data instead within a sequence of Ethernet frames. FH is defined as the network exchanging low-latency data between RU and BBU with a functional split of the protocol stack below or within MAC. The BBU is defined as a unit processing those parts of the baseband functions not contained in the RU. It may include functions of the whole radio stack or parts of it up to the PDCP.

E.g., depending on the functional split between RU and BBU, this data-stream becomes a variable bitrate stream, where the amount of data between RU and BBU is proportional to the amount of end user data. This allows significant statistical multiplexing gains on links aggregating the traffic of several RUs. Using statistical multiplexing gains, i.e. oversubscribing a link, may cause congestion and correspondingly delayed or dropped packets.

Document US 2017/0019803 A1 discloses a distributed unit comprising a baseband unit (BBU) and a plurality of remote radio heads (RRHs). Moreover, measures in order to handle congestion are described, where congestion is detected in a recipient, and, when congestion is detected, a transmission rate is reduced, for example.

EUGENE CHAI ET AL: "SPIRO: Turning elephants into mice with efficient RF transport", 2015 IEEE CONFERENCE ON COMPUTER COMMUNICATIONS (INFOCOM), 1 April 2015 (2015-04-01), pages 819-827, discloses requirements for fronthaul in cooperative transmission schemes such as CoMP, and describes congestion between baseband units (BBUs) and remote radio units (RRUs). In particular, counter-measures against congestion between BBUs and RRUs are described.

### Summary of the Invention

Embodiments of the present invention address this situation and aim to provide improved measures to handle congestion in fronthaul traffic.

This object is solved by an apparatus as set out in claim 1, and alternatively by a method as set out in claim 9.

Advantageous developments are defined in the dependent claims.

### Brief Description of the Drawings

These and other objects, features, details and advantages will become more fully apparent from the following detailed description of embodiments of the present invention which is to be taken in conjunction with the appended drawings, in which:
Fig. 1A shows a RU according to an embodiment of the present invention,
Fig. 1B shows a flowchart of a procedure carried out by the RU according to an embodiment of the present invention,
Fig. 2A shows a BBU according to an embodiment of the present invention,
Fig. 2B shows a flowchart of a procedure carried out by the BBU according to an embodiment of the present invention, and
Fig. 3 shows a scenario including a fronthaul network between a BBU and several RUs, to which several UEs are connected via a radio connection according to an embodiment of the present invention.

### Detailed Description of embodiments

In the following, description will be made to embodiments of the present invention. It is to be understood, however, that the description is given by way of example only, and that the described embodiments are by no means to be understood as limiting the present invention thereto.

However, before describing the embodiments, the problem underlying the present application is described in some more detail.

As mentioned above, in fronthaul traffic between a BBU and a RU, using statistical multiplexing gains, i.e. oversubscribing a link, may cause congestion and correspondingly delayed or dropped packets.

When using statistical multiplexing it may be the case that congestion occurs because there is more than average user traffic. Congestion of fronthaul traffic is critical as FH traffic must not be delayed much, because the traffic is quickly outdated. Equally, FH traffic should not be dropped. Acceptable delays are in the order of a few tens to hundreds of microseconds.

For regular IP traffic, several schemes to handle congestion are used in the field. The most prominent one is TCP congestion control, where the packet-rate of TCP packets is controlled by RTT and packet loss. Essentially a TCP connection adapts to the available bandwidth. This is complemented by active queue management (AQM) schemes, e.g. random early discard (RED), which starts discarding packets when queues in routers or switches are filling up. This in turn triggers TCP congestion control to reduce packet rate and in turn prevents that queues fill up completely. Two bits in the IP header are used for explicit congestion notification, which allows to carry information on congestion through a network without actually dropping packets.

In radio access networks HSDPA congestion control (CC) was developed. HSDPA CC measures delay build up between RNC and Nb and based on this information the BTS signals the RNC to send less data.

Such mechanisms are in use in the Internet as well as in radio access networks, but operate on a different time scale as needed for FH traffic. To prioritize among different traffic flows, DSCP marking is used, which allows to distinguish packets belonging to different service classes.

For FH traffic, traffic of different PDU sessions of one or several UEs are carried in a single packet, therefore DSCP marking of the packets does not allow to distinguish higher and lower priority PDUs within the same packet.

Embodiments of the present invention provide a solution for the BBU to react on congestion for FH traffic in both DL and UL direction in a Quality of Service (QoS) aware manner.

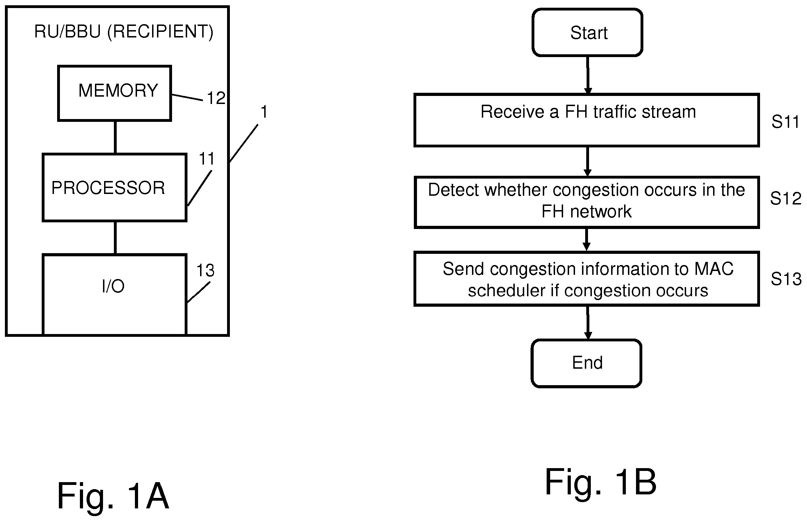

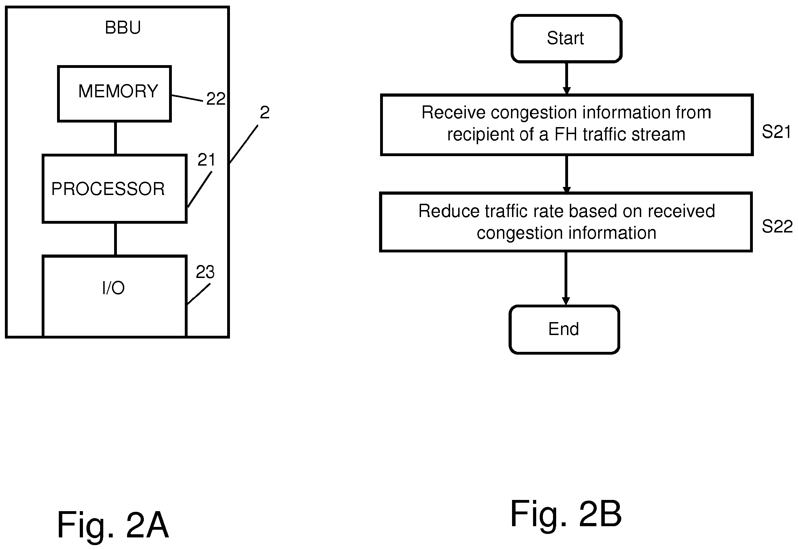

In the following, a general overview of an embodiment of the present invention is described by referring to Figs. 1A, 1B, 2A and 2B.

In particular, Fig. 1A shows a recipient 1 as an example for a first apparatus according to the present embodiment, which receives a fronthaul traffic stream. However, it is noted that the recipient may be a radio unit or a network element such as a BBU. In more detail, in case of downlink, the recipient is the RU, whereas in uplink, the recipient is the BBU. That is, the first apparatus may be any endpoint of a fronthaul traffic connection or a fronthaul traffic stream via a fronthaul network. Fig. 1B shows a procedure as carried out by the recipient.

The recipient 1 comprises at least one processor 11 and at least one memory 12 including computer program code. The at least one processor 11, with the at least one memory 12 and the computer program code, is configured to cause the apparatus to perform: receiving a fronthaul traffic stream via a fronthaul network between a network element and a radio unit (as shown in step S11 of Fig. 1B), detecting whether congestion occurs in the fronthaul network (as shown in step S12), and signaling congestion information concerning a congestion in case it is detected that congestion has occurred, to a media access control scheduler of the network element controlling the fronthaul traffic stream.

As mentioned above, the recipient 1 of the fronthaul traffic stream may be the RU or the BBU. In the latter case, the BBU sends the congestion information to its own media access control scheduler.

Fig. 2A shows a BBU 2 as an example for a second apparatus according to the present embodiment. However, the invention is not limited to a BBU, and the second apparatus can be a functional element inside a BBU carrying out a MAC scheduler function, for example. Thus, the apparatus can be any kind of network element which schedules fronthaul (FH) traffic between an endpoint (such as a DU, BBU etc.) of a fronthaul traffic connection or a fronthaul traffic stream via a fronthaul network and a radio unit (RU). The apparatus may also be a BBU including more than one MAC scheduler functions. Fig. 2B shows a procedure as carried out by the BBU 2.

The BBU 2 comprises at least one processor 21 and at least one memory 22 including computer program code. The at least one processor 21, with the at least one memory 22 and the computer program code, is configured to cause the apparatus to perform: controlling a fronthaul traffic stream in a fronthaul network between a network element comprising the apparatus and at least one radio unit, receiving congestion information concerning congestion in the fronthaul network from a recipient of the fronthaul traffic (as shown in step S21 of Fig. 2B), and reducing the traffic rate based on the received congestion information (as shown in step S22).

Thus, according to some embodiments of the present invention, the recipient of the fronthaul traffic stream (RU or BBU) detects whether congestion is present in the fronthaul network. If so, the recipient sends corresponding congestion information to the media access control (MAC) scheduler of the BBU, which then reduces the traffic rate based on the congestion information.

It is noted that the RU 1 and the BBU 2 may further comprise input/output (I/O) units or functions (interfaces) 13, 23 connected to the processor 11, 21, in order to provide connections to other elements.

The at least one processor 11 and 21 described above may also be circuitry, wherein an example for the circuitry is FPGA.

In the following, some embodiments of the present invention are described in more detail.

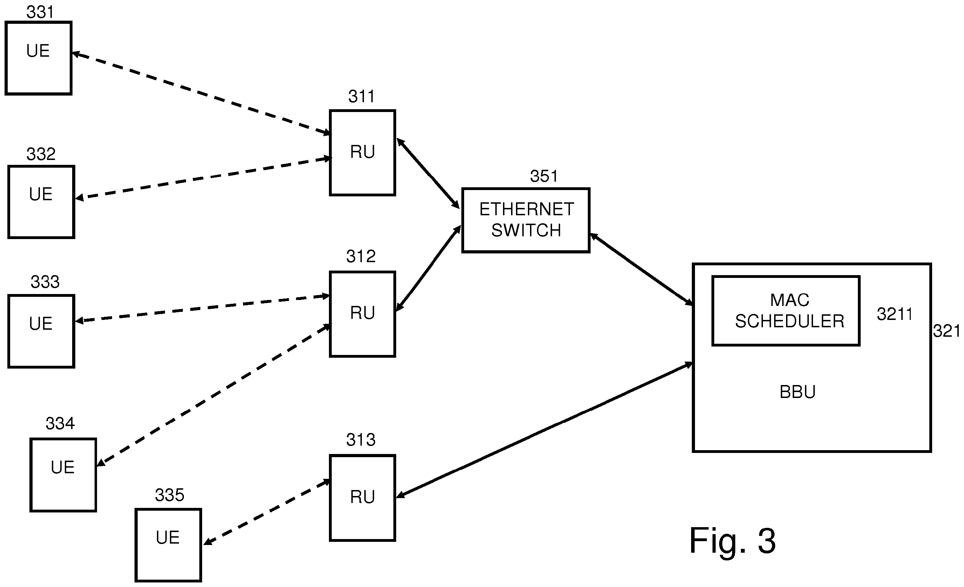

Fig. 3 shows an example for an overall architecture in connection with a fronthaul network, in which embodiments of the present invention may be applied. In particular, in this example, a BBU 321 is connected to a plurality of RUs 311 to 313 via a fronthaul network, and several UEs 331 to 335 are connected to the RUs 311 to 313 via radio connection. The radio connection is indicated by dashed arrows, whereas the connections (for example, fiber optic cables) between the BBU 321 and the RUs 311 to 313 are indicated by solid arrows. It is noted that the UEs cover also devices according to IoT (Internet of Things).

Furthermore, the connection between the BBU 321 and the RUs 311 and 312 is provided via an Ethernet switch 351 as an example for a shared resource.

The BBU 321 comprises a MAC scheduler 3211 (as an example for the apparatus or MAC scheduler 2 shown in Fig. 2A).

In the example of Fig. 3, an example is shown in which only one BBU is present in the fronthaul network. However, in practice also a plurality of BBUs may be present. Moreover, each BBU may comprise more than one MAC scheduler.

According to some embodiments of the present invention the recipient of a FH traffic stream (e.g., one of the RUs 311 to 313 shown in Fig. 3 in downlink, or the BBU 321 shown in Fig. 1 in uplink) identifies whether congestion occurs in the network, either by measuring delay or delay build up, increasing jitter, occurrence of packet drop or explicit congestion notification. This information is signaled to the MAC scheduler in the BBU, which reduces the traffic rate. In downlink direction, the MAC scheduler can simply request less data from the PDCP layer. It can do so in a quality of service aware manner, prioritizing important or urgent PDUs. In UL direction, it can assign less grants to UEs. Here the mechanism relies on the UE to prioritize among its PDU sessions.

In more detail, in Downlink direction, the RU measures whether the delay of received FH packets increases. It provides this information to the BBU. Similarly, the RU measures whether packets are dropped and provides this information to the BBU.

The BBU starts reacting if more than x percent, e.g. 5 percent, of its RUs reported congestion. Setting a certain threshold prevents instantaneous reaction to spurious congestions.

Once the BBU considers that congestion occurred, it instructs the MAC scheduler to schedule less data towards the RUs. The BBU can send less data to the RUs reporting congestion, but if the BBU is aware of the network topology it can reduce the rate of all or randomly of some RUs sharing the same link as those RUs reporting congestion. This would increase fairness among the RUs.

The MAC scheduler reduces the traffic rate by requesting less PDUs from the PDCP of UEs using the affected RUs to be scheduled. The MAC scheduler would do so in a QoS aware manner as it is knowing the relative importance and urgency of the different PDU sessions.

This allows to react in a QoS aware manner, despite multiplexing data of several PDU sessions onto the same packet transmitted between BBU and RU.

In Uplink direction, the BBU would measure whether there is delay or packet loss. The BBU can use this information directly to reduce the traffic rate of UEs on affected RUs. The scheduler BBU can reduce the amount of grants for the UEs. The BBU has to rely on the UEs to use the grants in a QoS aware manner.

Additionally, the BBU can monitor which UEs have had PDU sessions with a large amount of low-priority traffic in the recent past. The BBU can target bandwidth reductions in UL to these UEs.

Once the BBU has not received information on congestion in DL or measured it itself in UL for some time period it can relax the bandwidth reductions and return to normal operation.

The invention is not limited to the specific embodiments described above, and various modifications are possible.

In particular, embodiments of the invention are applicable to packetized fronthaul traffic of both LTE and 5G. However, embodiments of the invention may also be applied to other radio standards as well.

Thus, according to several embodiments of the present invention, a QOS handling of congestion for packetized fronthaul networks is achieved. Embodiments of the present invention are not limited to the examples as given before.

Names of network elements, protocols, and methods are based on current standards. In other versions or other technologies, the names of these network elements and/or protocols and/or methods may be different, as long as they provide a corresponding functionality.

In general, various embodiments of the UE can include, but are not limited to, mobile stations, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The memories 12 and 22 may be of any type suitable to the local technical environment and may be implemented using any suitable data storage technology, such as semiconductor based memory devices, magnetic memory devices and systems, optical memory devices and systems, fixed memory and removable memory. The processors 11 and 21 may be of any type suitable to the local technical environment, and may include one or more of general-purpose computers, special purpose computers, microprocessors, digital signal processors (DSPs) and processors based on a multi core processor architecture, as non-limiting examples.

Further, as used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

## Claims

1. An apparatus comprising means for performing:
controlling a fronthaul traffic stream in a fronthaul network between a baseband unit (2; 321) comprising the apparatus and at least one radio unit (1; 311, 312, 313),
receiving congestion information concerning congestion in the fronthaul network from a recipient of the fronthaul traffic, and
reducing the traffic rate based on the received congestion information, wherein
the means is further configured to perform: reducing the traffic rate when the congestion exceeds a threshold, and
a plurality of radio units (1; 311, 312, 313) is connected to the baseband unit (2; 321), and the threshold is defined as a percentage of radio units (1; 311, 312, 313) signaling the congestion information to the total number of radio units (1; 311, 312, 313) connected to the baseband unit (2; 321).

2. The apparatus according to claim 1, wherein the congestion information comprises information on detected delay or delay build up, increasing jitter, occurrence of packet drop and/or explicit congestion notification.

3. The apparatus according to claim 1 or 2, wherein the means is further configured to perform:
in downlink direction of the fronthaul traffic stream, reducing the traffic rate by requesting less data to be sent to a user equipment (331, 332, 333, 334, 335), and/or
in uplink direction of the fronthaul traffic stream, reducing the traffic rate by assigning less grants to user equipments (331, 332, 333, 334, 335) connected to the radio unit (1; 311, 312, 313).

4. The apparatus according to any one of the claims 1 to 3, wherein the means is further configured to perform:
reducing the traffic rate based on priority of traffic.

5. The apparatus according to any one of the claims 1 to 4, wherein a plurality of radio units (1; 311, 312, 313) is present, and wherein the means is further configured to perform:
reducing the traffic rate for all radio units (1; 311, 312, 313), for randomly selected radio units (1; 311, 312, 313), or for dedicated radio units (1; 311, 312, 313).

6. The apparatus according to any one of the claims 1 to 5, wherein the means is further configured to perform:
monitoring which user equipment (331, 332, 333, 334, 335) connected to the at least one radio unit (1; 311, 312, 313) had low-priority traffic, and
reducing bandwidth for the traffic rate of the user equipment (331, 332, 333, 334, 335) and/or reduce the amount of grants for this user equipment (331, 332, 333, 334, 335).

7. The apparatus according to any one of the claims 1 to 6, wherein the means is further configured to perform:
relaxing reduction on the traffic rate when congestion information is no longer received.

8. The apparatus according to any one of the claims 1 to 7, wherein the means comprises
at least one processor (21) or circuitry, and
at least one memory (22) including computer program code, the at least one processor (21), with the at least one memory and the computer program code, being configured to cause the performance of the apparatus.

9. A method comprising:
controlling a fronthaul traffic stream in a fronthaul network between a baseband unit (2; 321) carrying out the method and at least one radio unit (1; 311, 312, 313),
receiving (S21) congestion information concerning congestion in the fronthaul network from a recipient of the fronthaul traffic, and
reducing (S22) the traffic rate based on the received congestion information, wherein the method further comprises:
reducing the traffic rate when the congestion exceeds a threshold, wherein
a plurality of radio units (1; 311, 312, 313) is connected to the baseband unit (2; 321), and the threshold is defined as a percentage of radio units (1; 311, 312, 313) signaling the congestion information to the total number of radio units (1; 311, 312, 313) connected to the baseband unit (2; 321).

## Patentansprüche

1. Vorrichtung, die Mittel für Folgendes umfasst:
Steuern eines Fronthaulverkehrsstroms in einem Fronthaulnetzwerk zwischen einer Basisbandeinheit (2; 321), die die Vorrichtung umfasst, und mindestens einer Funkeinheit (1; 311, 312, 313),
Empfangen von Überlastungsinformationen, die eine Überlastung im Fronthaulnetzwerk betreffen, von einem Empfänger des Fronthaulverkehrs und
Reduzieren der Verkehrsrate auf Basis der empfangenen Überlastungsinformationen, wobei
die Mittel ferner dazu ausgelegt sind, Folgendes durchzuführen: Reduzieren der Verkehrsrate, wenn die Überlastung einen Schwellwert überschreitet, und
eine Vielzahl von Funkeinheiten (1; 311, 312, 313) mit der Basisbandeinheit (2; 321) verbunden ist und der Schwellwert als ein Prozentsatz von Funkeinheiten (1; 311, 312, 313) definiert ist, die die Überlastungsinformationen an die Gesamtzahl von Funkeinheiten (1; 311, 312, 313) signalisieren, die mit der Basisbandeinheit (2; 321) verbunden sind.

2. Vorrichtung nach Anspruch 1, wobei die Überlastungsinformationen Informationen über eine detektierte Verzögerung oder einen detektierten Verzögerungsanstieg, zunehmenden Jitter, Auftreten eines Paketverlusts und/oder eine explizite Überlastungsbenachrichtigung umfassen.

3. Vorrichtung nach Anspruch 1 oder 2, wobei die Mittel ferner dazu ausgelegt sind, Folgendes durchzuführen:
Reduzieren der Verkehrsrate in Downlinkrichtung des Fronthaulverkehrsstroms durch Anfordern des Sendens von weniger Daten an eine Teilnehmereinrichtung (331, 332, 333, 334, 335) und/oder
Reduzieren der Verkehrsrate in Uplinkrichtung des Fronthaulverkehrsstroms durch Zuweisen von weniger Gewährungen an Teilnehmereinrichtungen (331, 332, 333, 334, 335), die mit der Funkeinheit (1; 311, 312, 313) verbunden sind.

4. Vorrichtung nach einem der Ansprüche 1 bis 3, wobei die Mittel ferner dazu ausgelegt sind, Folgendes durchzuführen:
Reduzieren der Verkehrsrate auf Basis einer Verkehrspriorität.

5. Vorrichtung nach einem der Ansprüche 1 bis 4, wobei eine Vielzahl von Funkeinheiten (1; 311, 312, 313) vorhanden ist und wobei die Mittel ferner dazu ausgelegt sind, Folgendes durchzuführen:
Reduzieren der Verkehrsrate für alle Funkeinheiten (1; 311, 312, 313), für willkürlich ausgewählte Funkeinheiten (1; 311, 312, 313) oder für dedizierte Funkeinheiten (1; 311, 312, 313).

6. Vorrichtung nach einem der Ansprüche 1 bis 5, wobei die Mittel ferner dazu ausgelegt sind, Folgendes durchzuführen:
Überwachen, welche Teilnehmereinrichtung (331, 332, 333, 334, 335), die mit der mindestens einen Funkeinheit (1; 311, 312, 313) verbunden ist, Verkehr von geringer Priorität aufwies, und
Reduzieren einer Bandbreite für die Verkehrsrate der Teilnehmereinrichtung (331, 332, 333, 334, 335) und/oder Reduzieren der Menge von Gewährungen für diese Teilnehmereinrichtung (331, 332, 333, 334, 335).

7. Vorrichtung nach einem der Ansprüche 1 bis 6, wobei die Mittel ferner dazu ausgelegt sind, Folgendes durchzuführen:
Nachlassen der Reduzierung der Verkehrsrate, wenn keine Überlastungsinformationen mehr empfangen werden.

8. Vorrichtung nach einem der Ansprüche 1 bis 7, wobei die Mittel Folgendes umfassen
mindestens einen Prozessor (21) oder eine Schaltung und
mindestens einen Speicher (22), der Computerprogrammcode beinhaltet, wobei der mindestens eine Prozessor (21) mit dem mindestens einen Speicher und dem Computerprogrammcode dazu ausgelegt ist, die Durchführung der Vorrichtung zu veranlassen.

9. Verfahren, das Folgendes umfasst:
Steuern eines Fronthaulverkehrsstroms in einem Fronthaulnetzwerk zwischen einer Basisbandeinheit (2; 321), die das Verfahren umsetzt, und mindestens einer Funkeinheit (1; 311, 312, 313),
Empfangen (S21) von Überlastungsinformationen, die eine Überlastung im Fronthaulnetzwerk betreffen, von einem Empfänger des Fronthaulverkehrs und
Reduzieren (S22) der Verkehrsrate auf Basis der empfangenen Überlastungsinformationen, wobei das Verfahren ferner Folgendes umfasst:
Reduzieren der Verkehrsrate, wenn die Überlastung einen Schwellwert überschreitet, wobei
eine Vielzahl von Funkeinheiten (1; 311, 312, 313) mit der Basisbandeinheit (2; 321) verbunden ist und der Schwellwert als ein Prozentsatz von Funkeinheiten (1; 311, 312, 313) definiert ist, die die Überlastungsinformationen an die Gesamtzahl von Funkeinheiten (1; 311, 312, 313) signalisieren, die mit der Basisbandeinheit (2; 321) verbunden sind.

## Revendications

1. Appareil comprenant un moyen pour réaliser :
la commande d'un flux de trafic fronthaul dans un réseau fronthaul entre une unité de bande de base (2; 321) comprenant l'appareil et au moins une unité radio (1 ; 311, 312, 313),
la réception d'informations de congestion concernant la congestion dans le réseau fronthaul provenant d'un destinataire du trafic fronthaul, et
la réduction du débit de trafic sur la base des informations de congestion reçues, dans lequel
le moyen est en outre configuré pour réaliser :
la réduction du débit de trafic lorsque la congestion dépasse un seuil, et
une pluralité d'unités radio (1; 311, 312, 313) est connectée à l'unité de bande de base (2 ; 321), et le seuil est défini comme un pourcentage d'unités radio (1 ; 311, 312, 313) signalant les informations de congestion sur le nombre total d'unités radio (1 ; 311, 312, 313) connectées à l'unité de bande de base (2 ; 321).

2. Appareil selon la revendication 1, dans lequel les informations de congestion comprennent des informations sur un retard détecté ou une accumulation de retard, une gigue croissante, l'occurrence d'un abandon de paquets et/ou une notification explicite de congestion.

3. Appareil selon la revendication 1 ou 2, dans lequel le moyen est en outre configuré pour réaliser :
dans une direction de liaison descendante du flux de trafic fronthaul, la réduction du débit de trafic en demandant moins de données à envoyer à un équipement d'utilisateur (331, 332, 333, 334, 335), et/ou
dans une direction de liaison montante du flux de trafic fronthaul, la réduction du débit de trafic en attribuant moins d'autorisations à des équipements d'utilisateur (331, 332, 333, 334, 335) connectés à l'unité radio (1 ; 311, 312, 313).

4. Appareil selon l'une quelconque des revendications 1 à 3, dans lequel le moyen est en outre configuré pour réaliser :
la réduction du débit de trafic sur la base d'une priorité de trafic.

5. Appareil selon l'une quelconque des revendications 1 à 4, dans lequel une pluralité d'unités radio (1 ; 311, 312, 313) est présente, et dans lequel le moyen est en outre configuré pour réaliser :
la réduction du débit de trafic pour toutes les unités radio (1 ; 311, 312, 313), pour des unités radio (1 ; 311, 312, 313) sélectionnées de manière aléatoire, ou pour des unités radio (1 ; 311, 312, 313) dédiées.

6. Appareil selon l'une quelconque des revendications 1 à 5, dans lequel le moyen est en outre configuré pour réaliser :
une surveillance pour savoir quel équipement d'utilisateur (331, 332, 333, 334, 335) connecté à l'au moins une unité radio (1 ; 311, 312, 313) avait un trafic à faible priorité, et
la réduction d'une bande passante pour le débit de trafic de l'équipement d'utilisateur (331, 332, 333, 334, 335) et/ou la réduction de la quantité d'autorisations pour cet équipement d'utilisateur (331, 332, 333, 334, 335).

7. Appareil selon l'une quelconque des revendications 1 à 6, dans lequel le moyen est en outre configuré pour réaliser :
un relâchement de la réduction sur le débit de trafic lorsque des informations de congestion ne sont plus reçues.

8. Appareil selon l'une quelconque des revendications 1 à 7, dans lequel le moyen comprend
au moins un processeur (21) ou une circuiterie, et
au moins une mémoire (22) comportant un code de programme informatique, l'au moins un processeur (21), avec l'au moins une mémoire et le code de programme informatique, étant configurés pour provoquer la performance de l'appareil.

9. Procédé comprenant :
la commande d'un flux de trafic fronthaul dans un réseau fronthaul entre une unité de bande de base (2 ; 321) mettant en œuvre le procédé et au moins une unité radio (1 ; 311, 312, 313) ,
la réception (S21) d'informations de congestion concernant la congestion dans le réseau fronthaul provenant d'un destinataire du trafic fronthaul, et
la réduction (S22) du débit de trafic sur la base des informations de congestion reçues, dans lequel le procédé comprend en outre :
la réduction du débit de trafic lorsque la congestion dépasse un seuil, dans lequel
une pluralité d'unités radio (1; 311, 312, 313) est connectée à l'unité de bande de base (2 ; 321), et le seuil est défini comme un pourcentage d'unités radio (1 ; 311, 312, 313) signalant les informations de congestion sur le nombre total d'unités radio (1 ; 311, 312, 313) connectées à l'unité de bande de base (2 ; 321).
